# EUROPEAN PATENT SPECIFICATION

(11) **EP 1 479 596 B1**
(45) Date of publication and mention of the grant of the patent: **18.04.2007**
(21) Application number: 03027796.6
(22) Date of filing: 03.12.2003
(51) Int. Cl.: B62D 25/08, F16F 9/54, B60G 13/00, B60G 15/00

(54) **Upper mounting structure of rear strut assembly**
Obere Befestigungsvorrichtung eines hinteren Federbeins
Partie supérieure d'un dispositif de fixation d'une jambe de suspension arrière

(30) Priority: 21.05.2003 KR 2003032219
(43) Date of publication of application: 24.11.2004
(73) Proprietor: HYUNDAI MOTOR COMPANY, Seoul (KR)
(72) Inventor: Kim, Ki-Chang, Suwon-si Gyeonggi-do, 441-460 (KR)
(74) Representative: Viering, Jentschura & Partner

(56) References cited:
- FR-A- 2 672 548
- US-A- 4 042 259
- US-A- 5 823 552
- PATENT ABSTRACTS OF JAPAN vol. 1999, no. 01, 29 January 1999 (1999-01-29) -& JP 10 273073 A (NISSAN MOTOR CO LTD), 13 October 1998 (1998-10-13)

## Description

### FIELD OF THE INVENTION

The present invention relates to an upper mounting structure of a rear strut assembly according to the preamble of claim 1 which adapted to increase the rigidity of the mounting part with minimal components to thereby dampen noise and decrease the manufacturing cost and workload.

### BACKGROUND OF THE INVENTION

An upper mounting structure of a rear strut assembly according to the preamble of claim 1 is known from JP 10273073 A.

In automotive rear suspensions, a rear strut assembly comprises a shock absorber and a coil spring for providing a comfortable vehicle ride by absorbing road shocks. The rear strut assembly which buffers forces of impact between a car body and a vehicle wheel while the vehicle is in motion should be firmly mounted to the car body side, such that the mounting part thereof can obtain enough rigidity.

### SUMMARY OF THE INVENTION

The present invention provides an upper mounting structure of a rear strut assembly having the features of claim 1. Further embodiments of the invention are described in the dependent claims.

Embodiments of the present invention provide an upper mounting stricture of the rear strut assembly to which the load of the rear strut assembly is transmitted, formed with a polygonal section for increasing the rigidity, thereby reducing running noise as well as idle noise, and improving the Noise, Vibration, and Harshness (NVH) function.

The present invention further provides sufficient rigidity via the polygonal section, which allows the number of components to be reduced, shortens the workload and manufacturing cost, and improves the fuel consumption rate by reducing the total weight of the vehicle.

In one embodiment of the present invention, an upper mounting structure of a rear strut assembly comprises a rear wheel housing inner panel coupled by welding to a rear floor panel and an inner section of a quarter inner panel. A wheel housing cover having a guide hole and bolt holes is coupled by welding to the inner side of the rear wheel housing inner panel in order to form a polygonal section with the rear wheel housing inner panel. A reinforcing bracket and a welding nut are mounted by welding on the wheel housing cover to couple with the bolt hole.

### BRIEF DESCRIPTION OF THE DRAWINGS

For a better understanding of the nature and objects of the present invention, reference should be made to the following detailed description with the accompanying drawings, in which:
FIGS. 1 to 4 are perspective and longitudinal sectional views illustrating a structure of an upper mounting part of a rear strut assembly according to an embodiment of the present invention;
FIGS. 5 and 6 are perspective views illustrating a second embodiment of a reinforcing bracket according to the present invention; and
FIGS. 7 and 8 are perspective and longitudinal sectional views illustrating an upper mounting part of a rear strut assembly including a wheel housing reinforcing member according to another embodiment of the present invention.

### DETAILED DESCRIPTION OF THE PREFERRED EMBODIMENTS

The preferred embodiment of the present invention will now be described in detail with reference to the accompanying drawings.

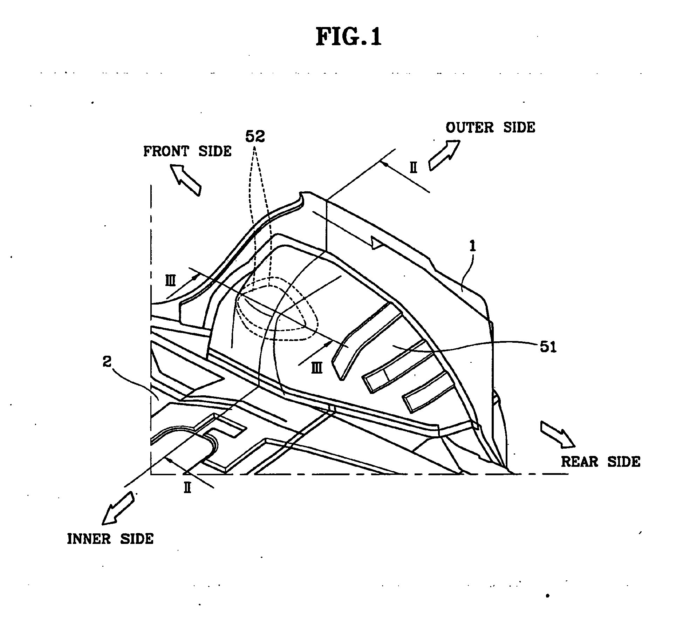

As shown in FIGS. 1 to 4, an upper mounting structure of a rear strut assembly comprises a rear wheel housing inner panel 51 coupled by welding to a rear floor panel 2 and an inner section of a quarter inner panel 1. A wheel housing cover 52 having a guide hole 52a in a certain size and a plurality of bolt holes 52b is coupled by welding to the inner side of the rear wheel housing inner panel 51 in order to form a polygonal section C with the rear wheel housing inner panel 51. A reinforcing bracket 53 and a welding nut 54 are mounted by being welded to the wheel housing cover 52 to couple with the bolt hole 52b.

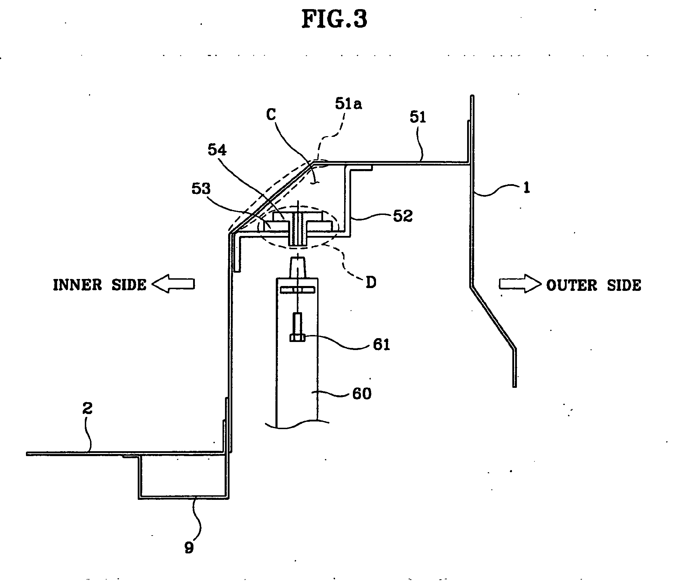

The guide hole 52a is formed on the wheel housing cover 52 to designate where a rear strut assembly 60 (see FIG. 3) should be installed. The bolt hole 52b, where a strut bolt 61 is inserted, is formed near the guiding hole 52a.

As shown in FIG. 3, the wheel housing cover 52 is bent in a stair form in its longitudinal sectional view to face the inner side of a bent portion 51a of the rear wheel housing inner panel 51 and to form a polygonal section C between the bent portion 51a and the wheel housing cover 52.

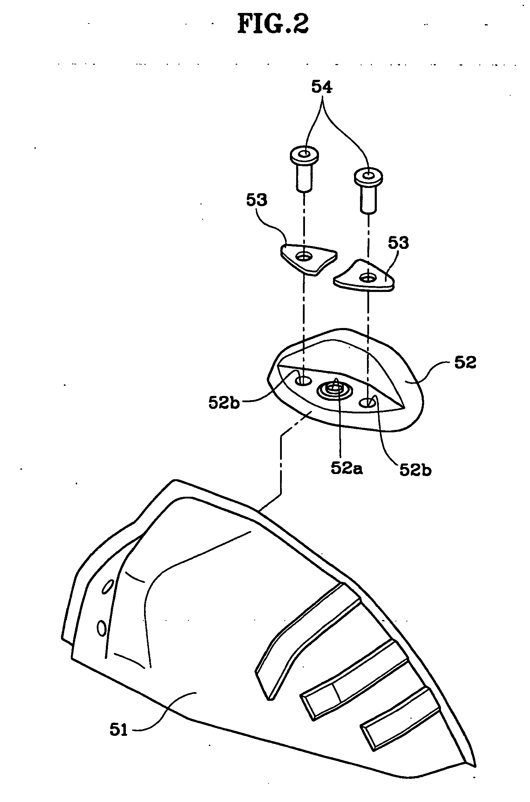

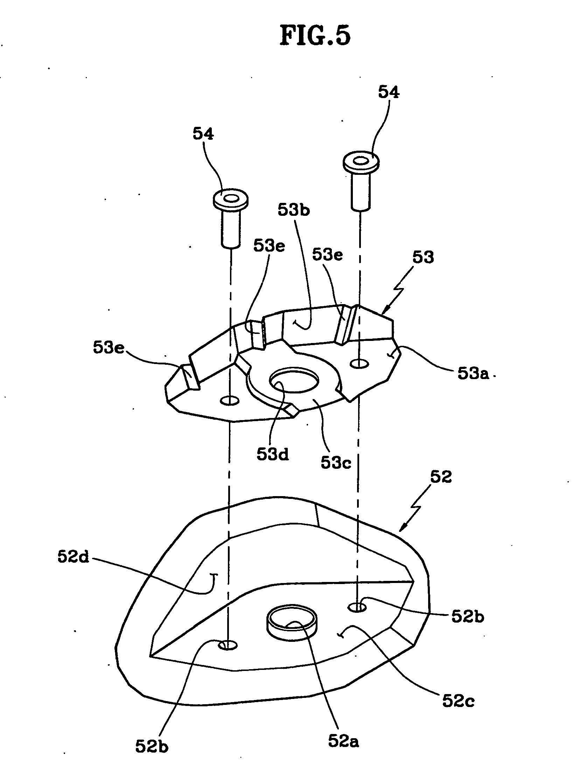

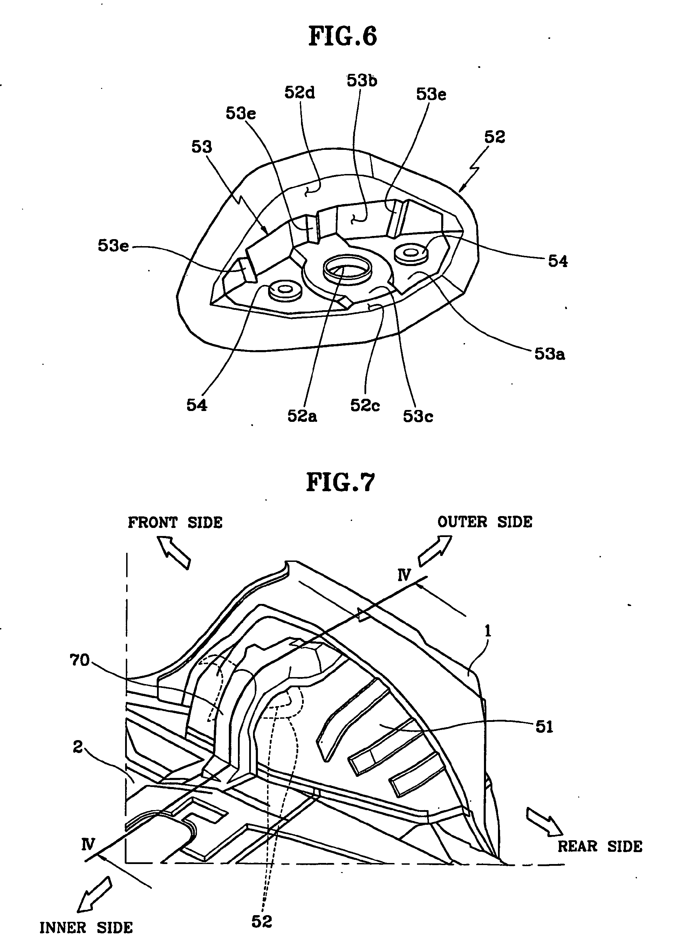

There are two different types of reinforcing brackets 53 in the present invention. The reinforcing bracket 53 according to the first embodiment shown in FIG. 2 is configured in the plural number and takes a form of a triangular plate having a prescribed thickness. As shown in FIGS. 5 and 6, the reinforcing bracket 53 according to the second embodiment includes a horizontal surface portion 53a molded identically to a horizontal surface 52c of the wheel housing cover 52 for a perfect fit. A vertical surface portion 53b is molded identically to a vertical surface 52d of the wheel housing cover 52.

The reinforcing bracket 53 according to the first embodiment is designed to coat only the adjacent portion of the bolt hole 52b and the bolt hole 52b of the wheel housing cover 52. The reinforcing bracket 53 according to the second embodiment, however, shrouds the horizontal surface 52c of the wheel housing cover 52 and most of the vertical surface 52d.

The respective reinforcing bracket according to the first and second embodiments are different in shape; however, both increase the rigidity of the wheel housing cover 52, such that the reference numeral is identically used as 53. The reinforcing bracket 53 may further be formed in other various shapes as long as it increases the rigidity of the wheel housing cover 52.

As shown in FIGS. 5 and 6, the horizontal surface portion 53a of the reinforcing bracket 53 is formed thereon with a horizontal reinforcing portion 53c having a dome shape according to the second embodiment. The horizontal reinforcing portion 53c is also formed with a connecting hole 53d to communicate with the guide hole 52a of the wheel housing cover 52. The vertical surface portion 53b of the reinforcing bracket 53 has a plurality of vertical reinforcing portions 53e that protrude toward the horizontal surface portion 53a in a triangular shape.

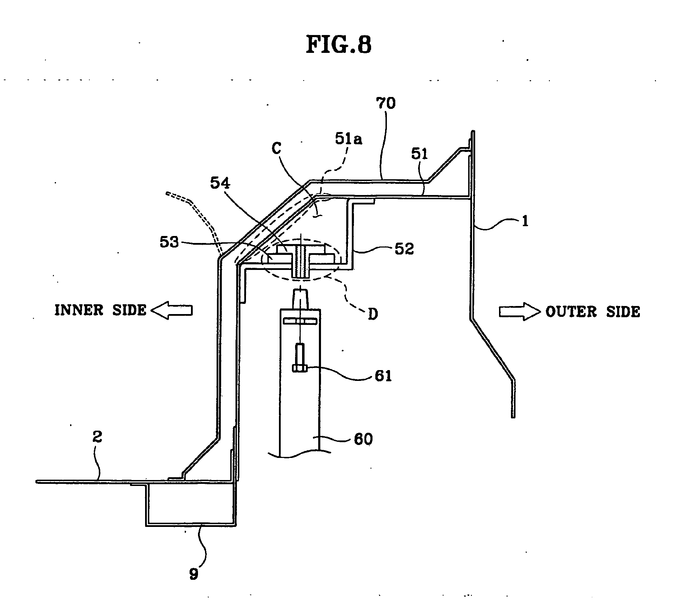

The upper mounting structure of the rear strut assembly according to the present invention may further include a wheel housing reinforcing member 70 as shown in FIGS. 7 and 8. The wheel housing reinforcing member 70 encompassing the installation portion of the wheel housing cover 52 is curvedly formed along the external surface of the rear wheel housing inner panel 51. One end of the wheel housing reinforcing member 70 is coupled by welding to the rear floor panel 2 while the other end is coupled by welding to the inner side of the quarter inner panel 1.

An unexplained number 9 of FIG. 3 denotes a rear floor side member that is coupled by being welding to the bottom side of the rear floor panel 2 and both ends of the rear floor side member 9 face the front and rear side of the car body.

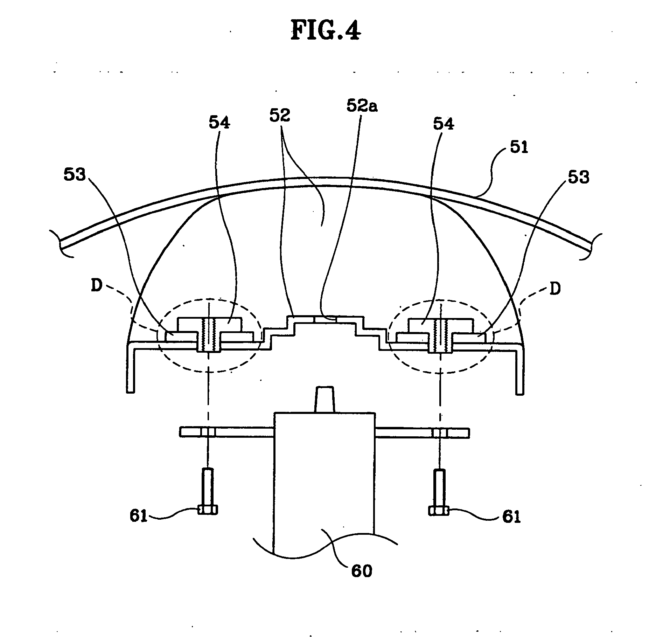

The polygonal section C formed between the rear wheel housing inner panel 51 and the wheel housing cover 52 is effective in increasing the rigidity of the installation part (D; see FIGS. 3 and 4) when the upper part of the rear strut assembly 60 is installed at the wheel housing cover 52 through the strut bolt 61 and the welding nut 54. Thus, the increased rigidity on the installation part D can effectively reduce the load-concentration transmitted via the rear strut assembly 60 to the wheel housing cover 52.

There is an advantage in a vehicle applying the structure of the present invention in that running noise and idle noise can be decreased, and the NVH function of the vehicle is greatly improved.

There is another advantage in that the upper mounting part of the rear strut assembly 60 increased in rigidity by the polygonal section C is not subject to have additional components for increasing the rigidity, thereby minimizing workload and increasing the fuel consumption rate by decreasing the total weight of the vehicle.

The welding nut 54 successively passing through the reinforcing bracket 53 and the bolt hole 52b of the wheel housing cover 52 has a T-shape and is fastened to the strut bolt 61 for installing the upper portion of the rear strut assembly 60 according to the embodiment of the present invention. The T-shaped welding nut 54 functions to increase the rigidity of the upper mounting part of the rear strut assembly 60 with the polygonal section C.

Once the reinforcing bracket 53 having the horizontal surface portion 53a and the vertical surface portion 53b according to the other embodiment of the present invention is set on the wheel housing cover 52, the overall rigidity of the wheel housing cover 52 increases in addition to the upper side of the rear strut assembly 60.

The wheel housing reinforcing member 70 also locally increases the rigidity of the installation portion of the wheel housing cover 52 in relation to the entire rear wheel housing inner panel 51, contributing to an increased rigidity of the upper side of the rear strut assembly 60 as well.

As apparent from the foregoing, there is an advantage in that the upper mounting part of the rear strut assembly is increased in rigidity, leading to effectively reduce the load-concentration transmitted via the rear strut assembly to the wheel housing cover, improve the NVH function by minimizing running noise and idle noise, shorten the workload as a result of less components, and increase the rate of the fuel consumption by reducing the total weight of the vehicle.

## Claims

1. An upper mounting structure of a rear strut assembly (60) comprising:
a rear wheel housing inner panel (51) coupled by welding to a rear floor panel (2) and a quarter inner panel (1) respectively;
a wheel housing cover (52) provided with a guide hole (52a) and bolt holes (52b), and coupled by welding to said rear wheel housing inner panel (51) so as to form a polygonal section (C) with said rear wheel housing inner panel (51); and
a reinforcing bracket (53) and a welding nut (54) mounted by welding on said wheel housing cover (52) to couple with said bolt holes (52b),
**characterized in that**
said reinforcing bracket (53) takes a form of a triangular plate and is designed to coat only said bolt hole formed on said wheel housing cover (52).

2. The upper mounting structure as defined in claim 1, wherein said wheel housing cover (52) is bent in a stair form and installed to face the inner side of a bent portion (51a) of said rear wheel housing inner panel (51) and to form a polygonal section (C) between said bent portion (51a) and said wheel housing cover (52).

3. The upper mounting structure as defined in claim 1, wherein said reinforcing bracket (53) including a horizontal surface portion (53a) and a vertical surface portion (53b) is installed to shroud most of the horizontal surface (52c) of said wheel housing cover (52) and the vertical surface (52d) of said wheel housing cover (52).

4. The upper mounting structure as defined in claims 1, 2 or 3, wherein said horizontal surface portion (53a) of said reinforcing bracket (53) is formed with a horizontal reinforcing portion (53c) having a dome shape, and said horizontal reinforcing portion (53c) is formed with a connecting hole to communicate with said guide hole (52a) of said wheel housing cover (52), and said vertical surface portion (53b) of said reinforcing bracket (53) is formed with a plurality of vertical reinforcing portions (53e) that protrude toward said horizontal surface portion (53a).

5. The upper mounting structure as defined in claim 1, wherein said welding nut (54) successively passing through said reinforcing bracket (53) and said bolt hole (52b) of said wheel housing cover (52) is T-shaped.

6. The upper mounting structure as defined in claim 1, wherein a wheel housing reinforcing member (70) is further curvedly formed along the external surface of said rear wheel housing inner panel (51) for encompassing the installation portion of said wheel housing cover (52), and one end of said wheel housing reinforcing member (70) is coupled by welding to said rear floor panel (2) while the other end is coupled by welding to the inner side of said quarter inner panel (1).

## Patentansprüche

1. Obere Montagestruktur einer hinteren Federbeinanordnung (60), aufweisend:
ein hinteres Radkasteninnenpaneel (51), das durch Schweißen mit einem hinteren Bodenpaneel (2) bzw. einem Viertelinnenpaneel (1) gekuppelt ist;
eine Radkastenabdeckung (52), die mit einem Führungsloch (52a) und Schraubenlöchern (52b) versehen ist und durch Schweißen mit dem hinteren Radkasteninnenpaneel (51) gekuppelt ist, um einen polygonalen Abschnitt (C) mit dem hinteren Radkasteninnenpaneel (51) zu bilden; und
einen Verstärkungshalter (53) und eine Schweißmutter (54), die durch Schweißen an der Radkastenabdeckung (52) derart montiert sind, dass sie mit den Schraubenlöchern (52b) gekuppelt sind,
**dadurch gekennzeichnet, dass**
der Verstärkungshalter (53) eine Form einer dreieckigen Platte einnimmt und derart gestaltet ist, dass er nur das in der Radkastenabdeckung (52) ausgebildete Schraubenloch überdeckt.

2. Obere Montagestruktur nach Anspruch 1, wobei die Radkastenabdeckung (52) in einer Stufenform gebogen ist und derart installiert ist, dass sie der Innenseite eines gebogenen Abschnitts (51a) des hinteren Radkasteninnenpaneels (51) gegenüberliegt und einen polygonalen Abschnitt (C) zwischen dem gebogenen Abschnitt (51a) und der Radkastenabdeckung (52) bildet.

3. Obere Montagestruktur nach Anspruch 1, wobei der Verstärkungshalter (53), der einen horizontalen Flächenabschnitt (53a) und einen vertikalen Flächenabschnitt (53b) aufweist, derart installiert ist, dass er den größten Teil der horizontalen Fläche (52c) der Radkastenabdeckung (52) und der vertikalen Fläche (52d) der Radkastenabdeckung (52) überdeckt.

4. Obere Montagestruktur nach Anspruch 1, 2 oder 3, wobei der horizontale Flächenabschnitt (53a) des Verstärkungshalters (53) mit einem horizontalen Verstärkungsabschnitt (53c) mit einer Domform versehen ist, und der horizontale Verstärkungsabschnitt (53c) mit einem Verbindungsloch versehen ist, um mit dem Führungsloch (52a) der Radkastenabdeckung (52) zu kommunizieren, und der vertikale Flächenabschnitt (53b) des Verstärkungshalters (53) mit einer Mehrzahl von vertikalen Verstärkungsabschnitten (53e) versehen ist, die in Richtung zu dem horizontalen Flächenabschnitt (53a) vorstehen.

5. Obere Montagestruktur nach Anspruch 1, wobei die Schweißmutter (54), die nacheinander durch den Verstärkungshalter (53) und das Schraubenloch (52b) der Radkastenabdeckung (52) hindurchtritt, T-förmig ist.

6. Obere Montagestruktur nach Anspruch 1, wobei ein Radkastenverstärkungselement (70) ferner entlang der äußeren Fläche des hinteren Radkasteninnenpaneels (51) zum Umspannen des Montageabschnitts der Radkastenabdeckung (52) gekrümmt ausgebildet ist, und das eine Ende des Radkastenverstärkungselements (70) durch Schweißen mit dem hinteren Bodenpaneel (2) gekuppelt ist, während das andere Ende durch Schweißen mit der Innenseite des Viertelinnenpaneels (1) gekuppelt ist.

## Revendications

1. Une structure de montage supérieure d'un ensemble de jambe de suspension arrière (60), comprenant :
- un panneau intérieur de caisson de roue arrière (51), couplé par soudage à un panneau de plancher arrière (2) et à un panneau de quart intérieur (1) respectivement;
- un couvercle de caisson de roue (52) muni d'un trou de guidage (52a) et de trous pour boulon (52b), et couplé par soudage audit panneau intérieur de caisson de roue arrière (51), pour former une section polygonale (C) avec ledit panneau intérieur de caisson de roue arrière (51) ; et
- une console de renforcement (53) et un écrou à souder (54), monté par soudage sur ledit couvercle de caisson de roue (52) pour accouplement auxdits trous pour boulon (52b),
**caractérisée en ce que**
- ladite console de renforcement (53) prend une forme de plaque triangulaire et est conçue pour revêtir uniquement ledit trou à boulon, formé sur ledit couvercle de caisson de roue (52).

2. La structure de montage supérieure telle que définie à la revendication 1, dans laquelle ledit couvercle de caisson de roue (52) est coudé en forme de marche d'escalier, et est installé pour être placé face au côté intérieur d'une partie coudée (51a) dudit panneau intérieur de caisson de roue arrière (51) et pour former une section polygonale (C) entre ladite partie coudée (51a) et ledit couvercle de caisson de roue (52).

3. La structure de montage supérieure telle que définie à la revendication 1, dans laquelle ladite console de renforcement (53), comprenant une partie de surface horizontale (53a) et une partie de surface verticale (53b), est installée pour couvrir la majeure partie de la surface horizontale (52c) dudit couvercle de caisson de roue (52) et la surface verticale (52d) dudit couvercle de caisson de roue (52).

4. La structure de montage supérieure telle que définie aux revendications 1, 2 ou 3, dans laquelle ladite partie de surface horizontale (53a) de ladite console de renforcement (53) est munie d'une partie de renforcement horizontale (53c) ayant une forme en dôme, et ladite partie de renforcement horizontale (53c) est munie d'un trou de connexion pour communiquer avec ledit trou de guidage (52a) dudit couvercle de caisson de roue (52), et ladite partie de surface verticale (53b) de ladite console de renforcement (53) est munie d'une pluralité de parties de renforcement verticales (53e), faisant saillie vers ladite partie de surface horizontale (53a).

5. La structure de montage supérieure telle que définie à la revendication 1, dans laquelle ledit écrou à souder (54), passant successivement par ladite console de renforcement (53) et ledit trou pour boulon (52b) dudit couvercle de caisson de roue (52), est en forme de T.

6. La structure de montage supérieure telle que définie à la revendication 1, dans laquelle un organe de renforcement de caisson de roue (70) est en outre formé de façon incurvée le long de la surface externe dudit panneau intérieur de caisson de roue arrière (51), pour englober la partie d'installation dudit couvercle de caisson de roue (52), et une extrémité dudit organe de renforcement de caisson de roue (70) est couplée par soudage audit panneau de plancher arrière (2), tandis que l'autre extrémité est couplée par soudage au côté intérieur dudit panneau de quart intérieur (1).
